# EUROPEAN PATENT SPECIFICATION

(11) **EP 1 552 742 B1**
(45) Date of publication and mention of the grant of the patent: **15.02.2012**
(21) Application number: 04257553.0
(22) Date of filing: 03.12.2004
(51) Int. Cl.: A01K 97/10

(54) **Angling rod support apparatus**
Angelruten-Haltesystem
Support de canne à pêche

(30) Priority: 05.12.2003 GB 0328278
(43) Date of publication of application: 13.07.2005
(73) Proprietor: Fox International Group Limited, Hainault, Essex IG6 3UT (GB)
(72) Inventor: Fox, Clifford Royston, Danbury Essex CM3 4PG (GB); Cottis, Maxwell Stewart, Braintree Essex CM7 9FD (GB)
(74) Representative: Crouch, David John

(56) References cited:
- EP-A- 0 914 767
- AU-A- 5 110 279
- GB-A- 2 313 029
- US-A- 2 311 823
- US-A- 2 483 012

## Description

The present invention relates to angling rod support apparatus comprising a bar supported by two pairs of legs at respective opposite ends of the bar.

One such construction which has already been proposed is in the form of a rod pod having a generally horizontal member supported by two pairs of legs at opposite ends of the horizontal member respectively, and a sliding component which can support a rod and which is attached to the horizontal member in such a fashion that it can be slid therealong and fixed against sliding movement on the horizontal member at a selected position therealong by means of a screw clamp.

A disadvantage of such a construction is the time taken to effect the screw clamping, especially if the rod pod has a number of different adjustments that have to be made and fixed in this way. Also, the screw threading of the clamp may become fouled. Finally, it can be difficult to obtain a uniform desired clamping force on successive occasions of use of the clamp.

US-A-2483012 describes a fishing rod holder that grasps a fishing rod by means of a clamp with a cam.

The present invention seeks to provide a remedy to one or more of the foregoing disadvantages.

Accordingly, the present invention is directed to an angling rod support apparatus having the construction set out in the opening paragraph of the present specification, in which one of the pairs of legs is connected to the bar by a sleeve through which the bar extends, the sleeve being provided with a cam lock and being slidable along the bar to a selected position whereupon it can be fixed at that position by means of the cam lock.

The bar may comprise two parts which are telescopically adjustable, with one of the parts being tubular so that it receives the other part in its hollow.

In such a construction, the cam lock is preferably at that end of the said at least one tubular part where it receives the other part.

An example of angling apparatus embodying the present invention is shown in the accompanying drawings, in which:
- Figure 1: is a perspective view from above of a rod pod embodying the present invention;
- Figure 2: is a side view of the rod pod shown in Figure 1;
- Figure 3: shows a view of an end part of the rod pod shown in Figure 1, on a larger scale;
- Figures 4 to 7: show respective views of different further parts of the apparatus shown in Figure 1, each on a larger scale; and
- Figure 8: shows a diagrammatic part cut-away side view of a locking device of the rod pod shown in Figure 1, on a larger scale.

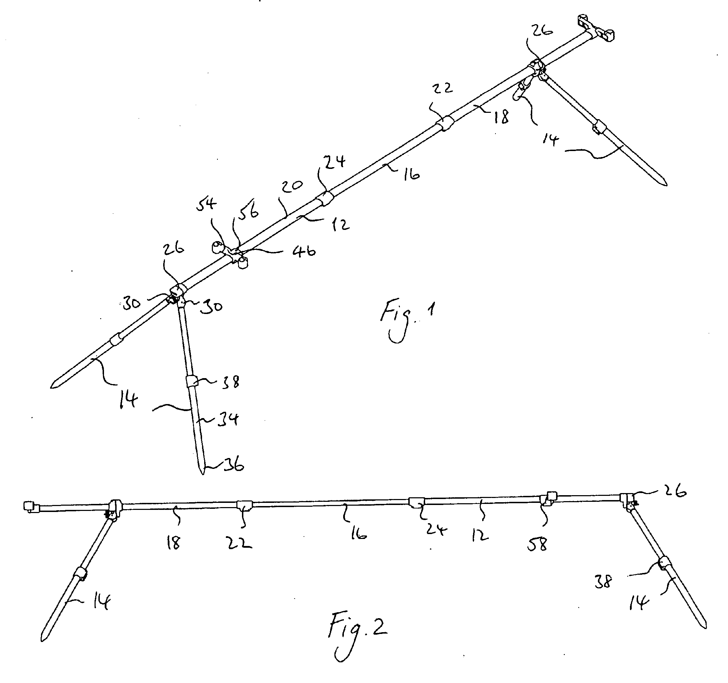

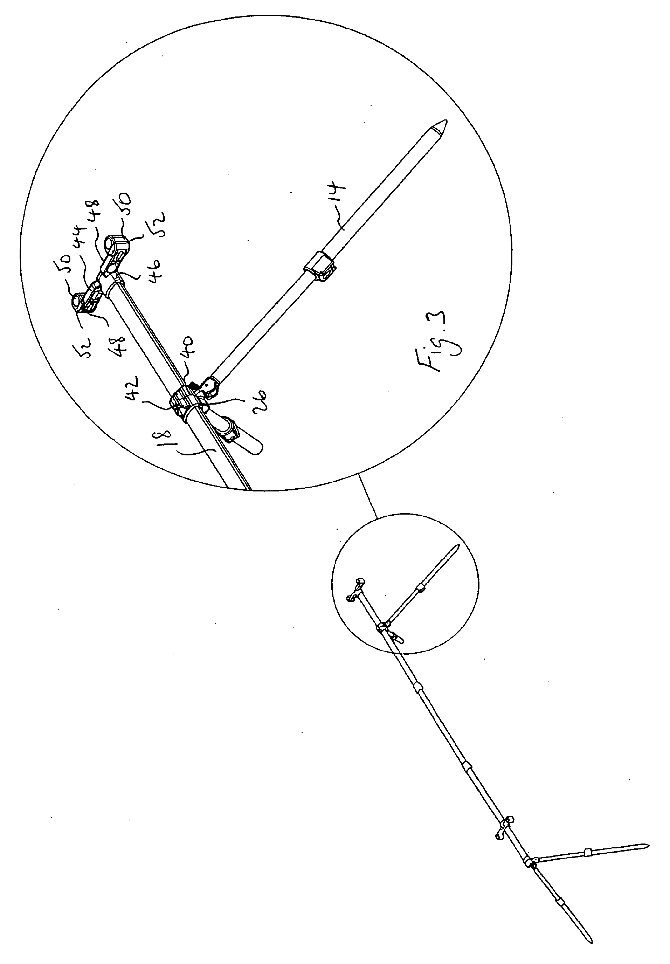

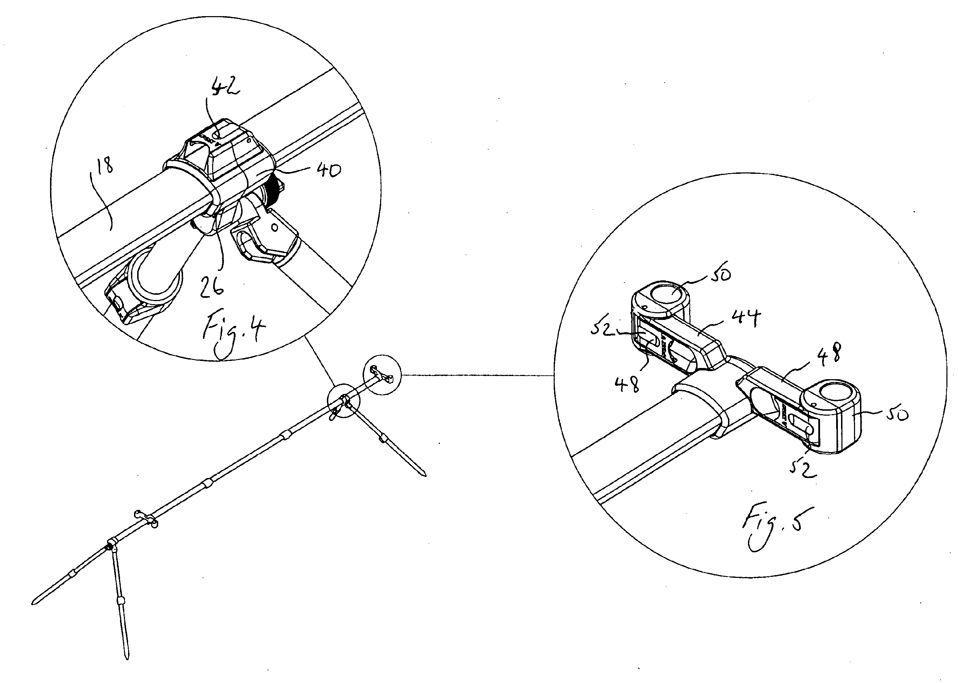

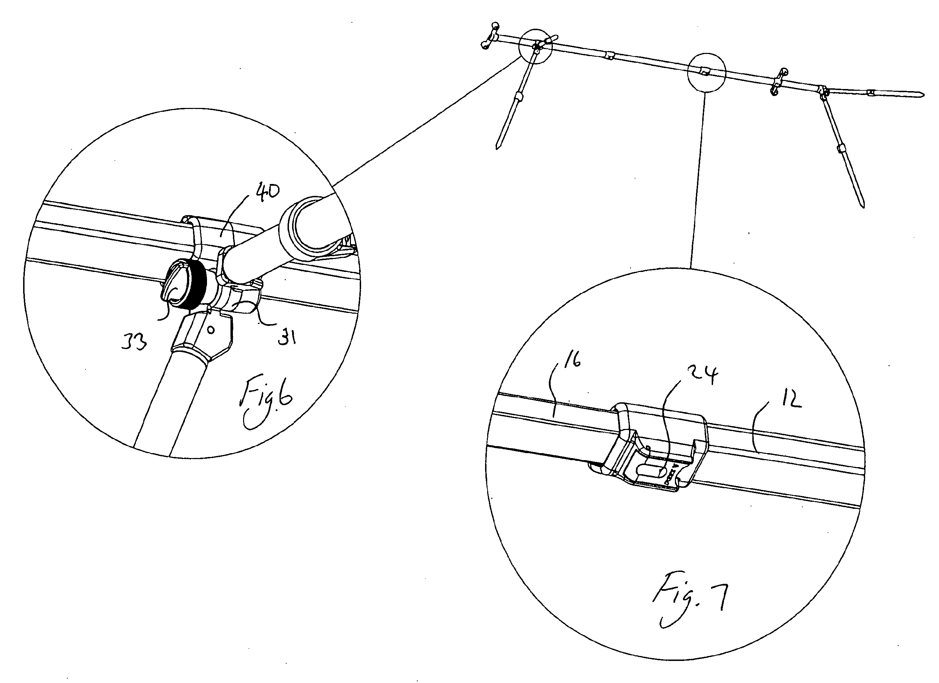

The rod pod 10 shown in Figures 1 to 8 comprises a compound generally horizontal elongate support bar 12, supported at generally opposite ends thereof by respective pairs of splayed-apart legs 14.

The generally horizontal bar 12 comprises a central elongate portion 16, opposite ends of which can be telescoped into tubular elongate portions 18 and 20 of the bar 12 respectively. At respective inner ends of the portions 18 and 20 where they receive the central portion 16 are respective cam locks 22 and 24.

Each pair of splayed-apart legs 14 comprises a connecting part 26, each provided with a pair of pivots 30, to which the upper ends of the legs 14 are pivotally attached. The angle of the splay of the legs can be adjusted by a further pivot device 31 and held in the selected degree of splay by means of a pivot clamp 33. Each leg comprises a first elongate portion 32 connected to and extending away from the pivot 30 and a tubular portion 34 into which the elongate portion 32 can slide telescopically. The end of the portion 34 which is further from the pivot 30 may have a pointed end 36 to enable it to be more securely planted on the ground. The other end of the portion 34 where it receives the elongate portion 32 is provided with a cam lock 38 which can be used to fix the relative position between the parts 32 and 34.

The connecting part 26 of one of the pairs of legs 14 is fixed at one end of the horizontal bar 12, and has a recess portion which receives an outer end of the portion 20 of the bar 12.

The connecting portion 26 of the other pair of legs 14 is in the form of a sleeve 40 through which extends the portion 18 of the horizontal bar 12. The sleeve 40 is provided with a cam lock 42 so that after the sleeve 40 has been slid along the elongate portion 18 of the bar 12 to a selected position, it can be fixed in that position by means of the cam lock 42.

The outer end of the portion 18 of the bar 12 has secured to it a stick holder 44 having a central connecting part 46 provided with a recess receiving that end of the portion 18, and outwardly from which extends two arms 48 from respective opposite sides of the connection portion 46. At the outer end of each arm 48 there is a sleeve portion 50 provided with a cam lock 52. This enables a generally upright stick which can be used to support a rod rest to be inserted into the sleeve 50 and adjusted in position. The cam lock 52 can then be used to secure the stick in that position.

A further stick holder 54 is arranged on the elongate portion 20 of the bar 12 and has the same construction as the stick holder 44 except that its central portion 46 is in the form of a sleeve 56, which sleeve is provided with a cam lock 58. This enables the holder 54 to be slid along the elongate portion 20 to a desired position, and then locked at that position by means of the cam lock 58.

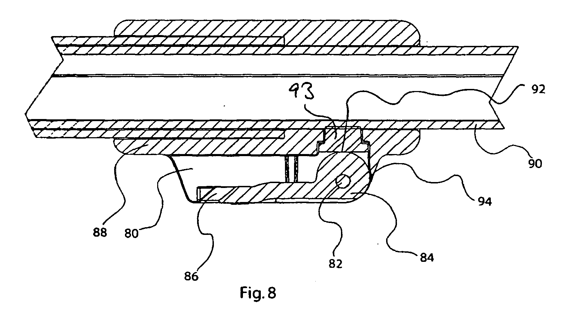

Each of the cam locks 22, 24, 38, 42 and 58 has substantially the same construction, which is illustrated in greater detail in Figure 8. Thus, it has a housing 80 supporting a pivot pin 82 about which is pivotally secured a cam 84, from which extends a lever 86. The housing 80 is secured to the outer component 88 which surrounds the inner component 90, being the two components which are slidable relative to one another and which can be fixed in a given relative sliding position by the cam lock, with the lever 86 flush with the housing 80 as shown in Figure 8, such that a portion 92 of the cam 84 abuts the component 90 via a floating part 93 with a force sufficient to fix the relative position of the components 88 and 90. When the lever 86 is lifted away from the housing 80 to pivot the cam 84 about the pivot 82, a portion 94 of the cam which is closer to the pivot 82 than the portion 92 is then located closest to the component 90 so as to release the cam lock and enable the components 88 and 90 to be slid relative to one another unless and until the lever 86 is pushed back manually so that it is once again flush with the housing 80.

The illustrated rod pod can be swiftly collapsed by releasing the cam locks and the clamps 29. The legs 14 can all be shortened and pivoted about their pivot connections 30 towards the generally horizontal bar 12, which itself can be shortened to its minimum length. The cam locks and the clamps can then all be put back in their locking positions to hold the whole rod pod in its collapsed position for storage. The rod pod 10 can subsequently be prepared ready for use by the reverse process.

Numerous variations and modifications to the illustrated apparatus may occur to the reader without taking it outside the scope of the present invention. To give one example only, a simpler form of construction may have a horizontal bar 12 of fixed length, legs 14 of fixed length and simply use the cam lock to adjust the relative position of a stick holder 54.

## Claims

1. Angling rod support apparatus comprising a bar (12) supported by two pairs of legs (14) at respective opposite ends of the bar (12), **characterised in that** one of the pairs of legs (14) is connected to the bar (12) by a sleeve (40) through which the bar (12) extends, the sleeve (40) being provided with a cam lock (42) and being slidable along the bar (12) to a selected position whereupon it can be fixed at that position by means of the cam lock (42).

2. Angling rod support apparatus according to claim 1, **characterised in that** the bar comprises two parts (16,18) which are telescopically adjustable, with at least one of the parts (18) being tubular so that it receives the other part (16) in its hollow,the said two parts (16,18) being held at a given telescopic adjustment by means of a further cam lock (22).

3. Angling rod support apparatus according to claim 2, **characterised in that** the cam lock (80 to 94) is at that end of the said one of the said two parts (18) where it receives the said other part (16).

## Patentansprüche

1. Angelruten-Tragvorrichtung, die einen Stab (12) umfasst, der durch zwei Paare von Beinen (14) an jeweiligen gegenüberliegenden Enden des Stabs (12) unterstützt ist, **dadurch gekennzeichnet, dass** eines der Paare von Beinen (14) mit dem Stab (12) durch eine Hülse (40) verbunden ist, durch die der Stab (12) verläuft, wobei die Hülse (40) mit einer Nockenverriegelung (42) versehen ist und längs des Stabs (12) an eine ausgewählte Position gleiten kann, woraufhin sie an dieser Position mittels der Nockenverriegelung fixiert werden kann.

2. Angelruten-Tragvorrichtung nach Anspruch 1, **dadurch gekennzeichnet, dass** der Stab zwei Teile (16, 18) umfasst, die teleskopartig einstellbar sind, wobei wenigstens eines der Teile (18) rohrförmig ist, so dass es das andere Teil (16) in seinem Hohlraum aufnimmt, wobei die beiden Teile (16, 18) mittels einer weiteren Nockenverriegelung (22) bei einer gegebenen Teleskopeinstellung gehalten werden.

3. Angelruten-Tragvorrichtung nach Anspruch 2, **dadurch gekennzeichnet, dass** sich die Nockenverriegelung (80 bis 94) an jenem Ende des Einen der zwei Teile (18) befindet, wo es das andere Teil (16) aufnimmt.

## Revendications

1. Support de canne à pêche, comprenant une barre (12), supportée par deux paires de pattes (14) à des extrémités opposées respectives de la barre (12), **caractérisé en ce que** l'une des paires de pattes (14) est reliée à la barre (12) par une douille (40), à travers laquelle la barre (12) s'étend, la douille (40) étant munie d'un verrou à came (42) et étant susceptible de coulisser le long de la barre (12), à une position sélectionnée, à la suite de quoi elle peut être fixée à cette position au moyen du verrou à came (42).

2. Support de canne à pêche selon la revendication 1, **caractérisé en ce que** la barre comprend deux parties (16, 18) ajustables de manière télescopique, au moins l'une des parties (18) étant tubulaire de manière qu'elle reçoive l'autre partie (16) dans son volume intérieur, lesdites deux partiels (16, 18) étant maintenues selon un ajustement télescopique donné au moyen d'un autre verrou à came (22).

3. Support de canne à pêche selon la revendication 2, **caractérisé en ce que** le verrou à came (80 à 94) est situé à l'extrémité de ladite une desdites deux parties (18) où elle reçoit ladite autre partie (16).
